# EUROPÄISCHE PATENTSCHRIFT

(11) **EP 3 064 920 B1**
(45) Veröffentlichungstag und Bekanntmachung des Hinweises auf die Patenterteilung: **21.06.2017**
(21) Anmeldenummer: 15157902.6
(22) Anmeldetag: 05.03.2015
(51) Int. Cl.: G01L 19/14, F16J 15/06, F16J 15/00

(54) **Messanordnung**
Measuring apparatus
Dispositif de mesure

(43) Veröffentlichungstag der Anmeldung: 07.09.2016
(73) Patentinhaber: VEGA Grieshaber KG, 77709 Wolfach (DE)
(72) Erfinder: Kopp, Thomas, 77709 Wolfach (DE)
(74) Vertreter: Westphal, Mussgnug & Partner Patentanwälte mbB

(56) Entgegenhaltungen:
- EP-A1- 1 471 341
- US-A- 5 665 920
- US-A- 5 869 766

## Beschreibung

Die vorliegende Erfindung betrifft eine Messanordnung mit den Merkmalen des Oberbegriffs des Patentanspruchs 1.

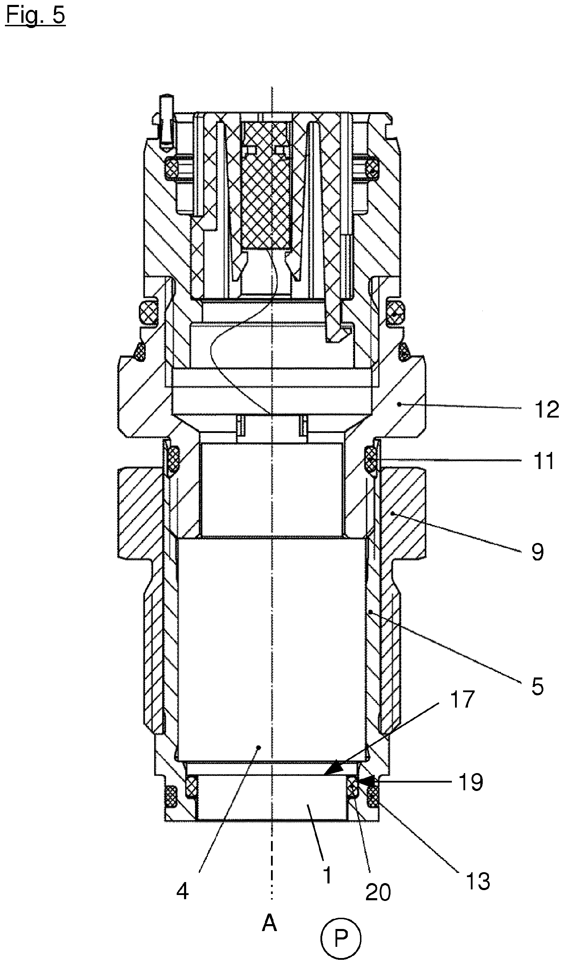

Eine solche Messanordnung, wie sie aus dem Stand der Technik bekannt ist, ist beispielsweise in Figur 5 dargestellt.

Figur 5 zeigt eine Messanordnung 100 mit einer Messzelle 1 zur Erfassung einer Prozessgröße, beispielsweise eines Drucks und einem die Messzelle 1 wenigstens radial umgebenden Gehäuse 5. Die Messzelle 1 ist in Axialrichtung A vorderzeitig in dem Gehäuse 5 angeordnet, wobei ein Zwischenraum 19 zwischen der Messzelle 1 und dem Gehäuse 5 gegen ein Eindringen von Prozessmedium aus einer Prozessumgebung P mit einer Dichtung 20 abgedichtet ist. Die Dichtung 20 ist in dem Zwischenraum 19 angeordnet und stützt sich rückseitig an beispielsweise einer Stützfläche 17 eines Elektronikgehäuses 4, welches ebenfalls in dem Gehäuse 5 angeordnet ist, ab. Ebenso ist die Messzelle 1 rückseitig an dem Elektronikgehäuse 4 bzw. der Stützfläche 17 abgestützt. Rückseitig ist an dem Gehäuse 5 ein sogenannter Gehäuseadapter 12 angeordnet, wobei ein Übergang zwischen dem Gehäuseadapter 12 und dem Gehäuse 5 über eine umlaufende Dichtung 11 abgedichtet ist. Das Gehäuse 5 ist beispielsweise über eine Druckschraube 9, die auf das Gehäuse 5 wirkt mit einem Behälteranschluss 8, beispielsweise einer Einschweißmuffe verbindbar und in dieser fixierbar. Über eine umlaufende Außendichtung 13 ist das Gehäuse 5 auch im Verhältnis zu dem Behälteranschluss 8 abgedichtet, sodass eine mediendichte Anordnung der Messanordnung 100 in einer Prozessumgebung P ermöglicht wird.

In dieser aus dem Stand der Technik bekannten Anordnung ist die Messzelle 1, typischerweise ein Drucksensor mit einer radial zu dem Drucksensor 1 angeordneten Dichtung 20, typischerweise einem O-Ring abgedichtet. Durch den radialen Einbau der Dichtung 20 kann der Drucksensor 1 frontbündig mit dem Gehäuse 5 abschließen und so optimal in der Prozessumgebung P angeordnet werden. Andere Messanordnungen sind aus den Dokumenten US 5869766, EP 1471341 und US 5665920 bekannt. An der aus dem Stand der Technik bekannten Anordnung wird es als nachteilig empfunden, dass diese eine häufig als unzureichend empfundene Diffusionsdichtigkeit aufweist. Hier ist die Aufgabe der vorliegenden Erfindung eine aus dem Stand der Technik bekannte Anordnung derart weiterzuentwickeln, dass diese eine erhöhte Diffusionsdichtigkeit aufweist. Bevorzugt sollte die Anordnung auch einen frontbündigen Einbau der Messzelle ermöglichen.
Diese Aufgabe wird durch eine Anordnung mit den Merkmalen des Patentanspruchs 1 gelöst.
Eine erfindungsgemäße Messanordnung mit einer Messzelle zur Erfassung einer Prozessgröße und einem die Messzelle wenigstens radial umgebenden Gehäuse, wobei die Messzelle in Axialrichtung vorderseitig an dem Gehäuse angeordnet ist und einen Zwischenraum zwischen der Messzelle und dem Gehäuse gegen ein Eindringen von Prozessmedium mit einer Dichtung abgedichtet ist, zeichnet sich dadurch aus, dass die Dichtung wenigstens ein die Messzelle radial umgebendes erstes Dichtelement und ein die Messzelle radial umgebendes zweites Dichtelement aufweist, das zweite Dichtelement in Axialrichtung zu dem ersten Dichtelement beabstandet und vor diesem angeordnet ist und das Gehäuse wenigstens einen sich in Axialrichtung erstreckenden ersten Abschnitt und wenigstens einen daran angeordneten sich in Radialrichtung zwischen den Dichtelementen erstreckenden zweiten Abschnitt aufweist.

Durch die Anordnung von zwei in Axialrichtung gesehen hintereinander liegenden Dichtelementen, die durch den in Radialrichtung verlaufenden zweiten Gehäuseabschnitt voneinander getrennt sind, wird die Diffusionsdichtigkeit der zur Verfügung gestellten Dichtung deutlich erhöht, wobei durch den zwischen den Dichtelementen angeordneten Gehäuseabschnitt ein mechanischer Anschlag für die Dichtelemente zur Verfügung gestellt wird, der eine Wechselwirkung zwischen den Dichtelementen, beispielsweise ein Verfließen eines verwendeten thermoplastischen Elastomers der Dichtelemente verhindert.

In einer Weiterbildung der Messanordnung weist das Gehäuse einen sich in Axialrichtung erstreckenden dritten Abschnitt auf, der das zweite Dichtelement in Axialrichtung überragt und an dem ein sich in Radialrichtung erstreckender vierter Abschnitt angeordnet ist, der vor dem zweiten Dichtelement sitzt.

Durch eine derartige Ausgestaltung des Gehäuses, die bewirkt, dass ein radial verlaufender Gehäuseabschnitt vor dem zweiten Dichtelement sitzt und dieses gegen unmittelbare Einflüsse aus der Prozessumgebung abschirmt wird eine deutlich erhöhte mechanische Belastbarkeit der Anordnung erreicht und gleichzeitig ein mechanischer Anschlag für das zweite Dichtelement in vorderseitiger Richtung zur Verfügung gestellt.

Ferner kann das Gehäuse einen sich in Axialrichtung erstreckenden fünften Abschnitt aufweisen, der die Messzelle in Axialrichtung überragt, an dem ein sich in Radialrichtung erstreckender sechster Abschnitt angeordnet ist, und wobei zwischen dem sechsten Abschnitt und der Messzelle eine drittes Dichtelement angeordnet ist.

Durch eine derartige Ausgestaltung des Gehäuses kann ein drittes stirnseitig angeordnetes Dichtelement, welches dann zwischen der Messzelle und dem Gehäuse sitzt, zum Einsatz kommen, wodurch einerseits die Diffusionsdichtigkeit der beschriebenen Anordnung weiter erhöht und andererseits ein mechanischer Anschlag für die Messzelle bereitgestellt wird. Auf diese Weise kann verhindert werden, dass die Messzelle beispielsweise bei Unterdrücken aus dem Gehäuse gezogen wird.

Um sowohl einen Aufbau des Gehäuses mit zwei als auch mit drei Dichtelementen zu ermöglichen, ist es sinnvoll, dass das Gehäuse wenigstens zweiteilig ausgebildet ist, wobei ein erster Teil Halterungsorgane zur mittelbaren oder unmittelbaren Befestigung der Messanordnung an einem Behälter sowie wenigstens den ersten Abschnitt und den zweiten Abschnitt aufweist und der zweite Teil wenigstens den dritten Abschnitt und den vierten Abschnitt und vorzugsweise den fünften und den sechsten Abschnitt aufweist.

Durch eine zweiteilige Ausgestaltung der Gehäuses, insbesondere eine Ausgestaltung, bei der der zweite Teil des Gehäuses ringförmig ausgestaltet und vorderseitig mit dem ersten Teil des Gehäuses verbunden ist, hat den Vorteil, dass der erste Teil des Gehäuses, sowohl für eine Ausgestaltung mit zwei Dichtelementen als auch eine Ausgestaltung mit drei Dichtelementen zwischen Messzelle und Gehäuse, identisch ausgestaltet sein kann. Variationen im Gehäuseaufbau für das zweite Dichtelement oder das zweite Dichtelement und das dritte Dichtelement werden durch den zweiten Teil des Gehäuses, der mit dem ersten Teil des Gehäuses vorzugsweise verschweißt ist, realisiert.

In dem zweiten Teil des Gehäuses kann ferner eine Außendichtung angeordnet sein, die das Gehäuse gegen einen Behälteranschluss, beispielsweise einen Einschweißflansch abdichtet.

Vorzugsweise sind die Halterungsorgane als umlaufender Außensteg sowie als auf den Außensteg wirkende Druckschraube ausgebildet, sodass das Gehäuse mittels Druckschraube in einem Behälteranschluss, beispielsweise einem Einschweißflansch oder einem entsprechend ausgebildeten Stutzen eines Behälters verspannt werden kann.

Die vorliegende Erfindung wird nachfolgend unter Bezugnahme auf die beigefügten Figuren eingehend erläutert. Es zeigen:
- Fig. 1: einen Teilschnitt durch ein Ausführungsbeispiel einer Messanordnung mit zwei radial angeordneten Dichtelementen,
- Fig. 2: eine Ausschnittsvergrößerung aus Figur 1,
- Fig. 3: einen Teilschnitt durch ein Ausführungsbeispiel einer Messanordnung mit zwei radial angeordneten Dichtelementen sowie einem stirnseitig angeordneten Dichtelement,
- Fig. 4: eine Ausschnittsvergrößerung aus Figur 3 und
- Fig. 5: eine Messanordnung gemäß dem Stand der Technik (schon behandelt).

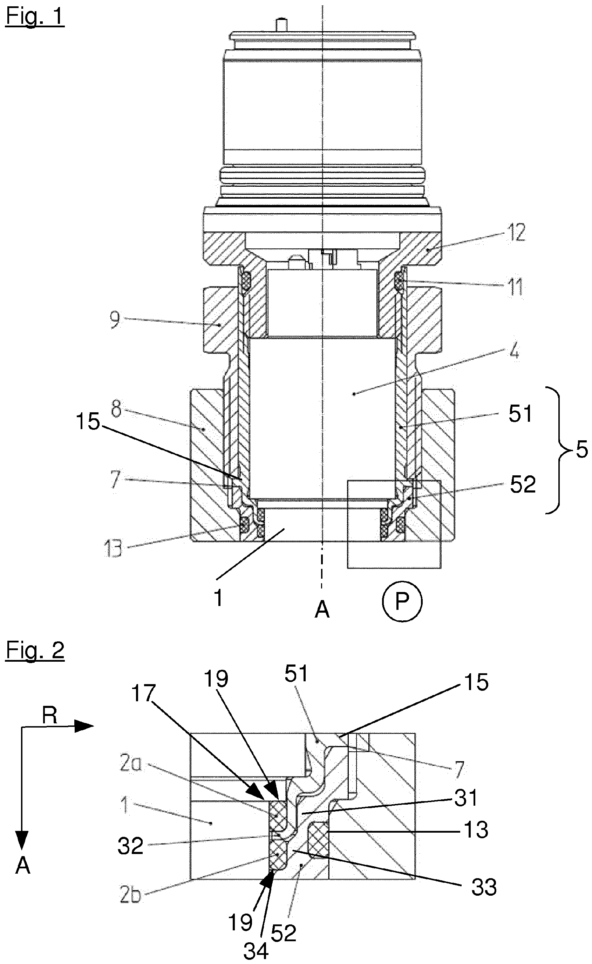

Figur 1 zeigt einen Teilschnitt durch ein erstes Ausführungsbeispiel einer Messanordnung 100. In Figur 2 ist eine Ausschnittsvergrößerung aus Figur 1 dargestellt.

Bei der in den Figuren 1 und 2 dargestellten Messanordnung 100 ist eine Messzelle 1, vorliegend eine Druckmesszelle, vorderseitig in einem Gehäuse 5, welches die Messzelle 1 radial umgibt, angeordnet. Die Messzelle 1 sitzt in dem Gehäuse 5 in Axialrichtung A vorderseitig, d. h. zu einer Prozessumgebung P hin orientiert und derart angeordnet, dass eine Prozessgröße aus der Prozessumgebung P, beispielsweise ein Druck durch die Messzelle 1 erfassbar ist. Das Gehäuse 5 der Messanordnung 100 im vorliegenden Ausführungsbeispiel zweiteilig ausgebildet, wobei ein erster Teil 51 des Gehäuses 5 ein Elektronikgehäuse 4 aufnimmt, an dem sich die vorderseitig dem Elektronikgehäuse 4 angeordnete Messzelle 1 rückseitig an einer Stützfläche 17 abstützt. Der erste Teil 51 des Gehäuses 5 weist ferner einen umlaufenden Außensteg 15 auf, auf den eine das Gehäuse 5 umgreifende Druckschraube 9 wirkt, mittels derer das Gehäuse 5 in einem Behälteranschluss 8, beispielsweise eine Einschweißmuffe verspannbar ist.

Rückseitig des Elektronikgehäuses 4 ist in das Gehäuse 5 ein Gehäuseadapter 12 eingeschraubt, an dem sich das Elektronikgehäuse 4 abstützt. Ein Übergang zwischen dem Gehäuseadapter 12 und dem Gehäuse 5 ist durch eine umlaufende Dichtung 11 abgedichtet. Der Gehäuseadapter 12 trägt rückseitig entsprechende Anschlussmöglichkeiten für eine Messelektronik oder geeignete Anschlüsse, beispielsweise für einen Busanschluss.

Vorderseitig weist der erste Teil 51 des im Wesentlichen hohlzylindrisch ausgestalteten Gehäuses 5 einen ersten Abschnitt 31 auf, der in Axialrichtung A verläuft und an dem ein zweiter Abschnitt 32, der in Radialrichtung R verläuft, angeordnet ist. Der zweite Abschnitt 32 ist derart ausgebildet, dass er eine erste Dichtung 2a und eine zweite Dichtung 2b, die zwischen der Messzelle 1 und dem Gehäuse 5 bzw. der Messzelle 1 und den Gehäuseteilen 51, 52 angeordnet sind, mechanisch voneinander trennt und Wechselwirkungen zwischen den Dichtelementen 2a, 2b verhindert. Insbesondere dient der zweite Abschnitt 32 als vorderseitiger Anschlag für das erste Dichtelement 2a sowie als rückseitiger Anschlag für das zweite Dichtelement 2b.

Wie bereits erwähnt, ist das Gehäuse 5 im vorliegenden Ausführungsbeispiel zweiteilig ausgebildet, wobei der zweite Teil 52 des Gehäuses 5 im Wesentlichen ringförmig ausgebildet ist undwenigstens einen dritten Abschnitt 33 aufweist, der sich in Axialrichtung A erstreckt und an dem vorderseitig ein vierter Abschnitt 34, der sich in Radialrichtung erstreckt, angeordnet ist. Der dritte Abschnitt 33 ist derart dimensioniert, dass er das zweite Dichtelement 2b in Axialrichtung überragt, sodass der vierte Abschnitt 34 vorderseitig zu dem zweiten Dichtelement 2b angeordnet ist. Auf diese Weise bildet der vierte Abschnitt 34 einen mechanischen Schutz für das zweite Dichtelement 2b gegen ein abrasive Prozessumgebung P und wirkt als mechanischer Anschlag in vorderseitiger Richtung derart, dass das zweite Dichtelement 2b nicht aus dem Gehäuse 5, beispielsweise durch einen Unterdruck, gezogen werden kann.

Der erste Teil 51 und der zweite Teil 52 des Gehäuses 5 sind über eine umlaufende Fügung 7, beispielsweise einer Schweißnaht miteinander verbunden, sodass ein einheitliches Gehäuse 5 gebildet ist.

In dem zweiten Teil 52 des Gehäuses 5 ist in einer umlaufenden Nut außerdem die umlaufende Außendichtung 13 angeordnet, die das Gehäuse 5 gegen den Behälteranschluss 8 abdichtet.
Im vorliegenden Ausführungsbeispiel sind sämtliche Dichtelemente 2a, 2b, 11, 13 als O-Ringe ausgebildet und damit auf günstige Weise mit hoher Qualität realisierbar.

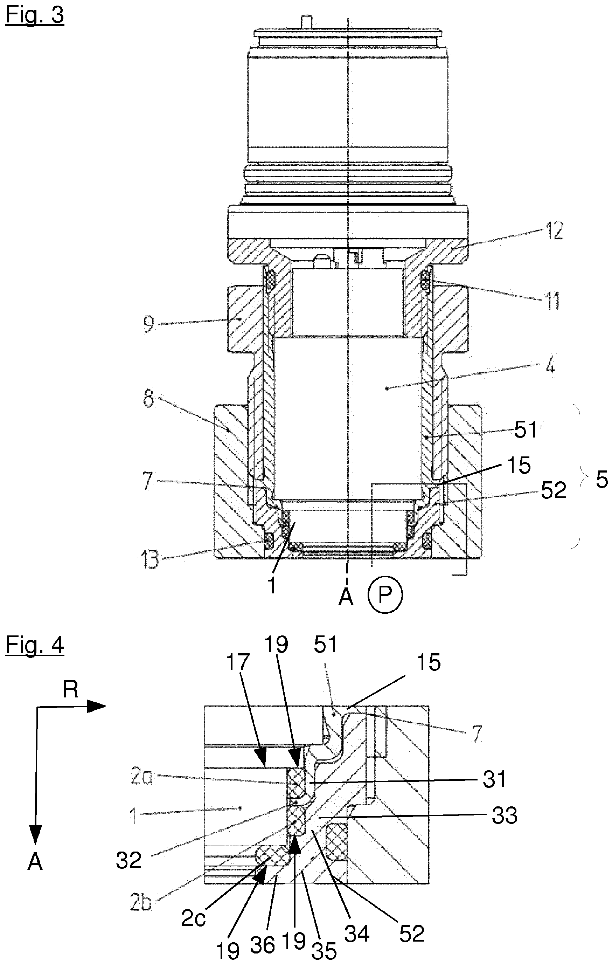

Die Figuren 3 und 4 zeigen in einem Teilschnitt sowie in einer Ausschnittsvergrößerung ein weiteres Ausführungsbeispiel einer Messanordnung 100 mit radial angeordneten Dichtelementen 2a, 2b sowie einem stirnseitigen angeordneten dritten Dichtelement 2c. Der Aufbau der Messanordnung gemäß den Figuren 3 und 4 unterscheidet sich von dem Aufbau der Messanordnung 100 aus den Figuren 1 und 2 im Wesentlichen durch die Ausgestaltung des zweiten Teils 52 des Gehäuses 5, sodass zur Vermeidung von Wiederholungen im Hinblick auf die übereinstimmenden Merkmale auf die vorhergehende Beschreibung verwiesen wird.

Der zweite Teil 52 des Gehäuses 5 weist in dem vorliegenden Ausführungsbeispiel einen fünften Abschnitt 35 auf, der sich in Axialrichtung ausgehend von dem vierten Abschnitt 34 erstreckt und die Messzelle 1 in Axialrichtung A vorderseitig überragt. An dem fünften Abschnitt 35 ist ein sechster Abschnitt 36, der sich in Radialrichtung R erstreckt, angeordnet, wobei in einem Zwischenraum 19 zwischen dem sechsten Abschnitt 36 und der Messzelle 1 ein drittes Dichtelement 2c, das stirnseitig zu der Messzelle 1 angeordnet ist, sitzt. Sowohl die Messzelle 1 als auch das dritte Dichtelement 2c können sich an dem sechsten Abschnitt 36 in Axialrichtung A vorderseitig abstützen, sodass die Messzelle 1 in diesem Ausführungsbeispiel in Axialrichtung sowohl vorderseitig als auch rückseitig mechanisch abgestützt ist. Der erste Teil 51 des Gehäuses 5 sowie der zweite Teil 52 des Gehäuses 5 sind auch im vorliegenden Ausführungsbeispiel über eine umlaufende Schweißnaht 7 miteinander verbunden, sodass ein einheitliches Gehäuse 5 gebildet ist. Eine Einwirkung des Prozessmediums aus der Prozessumgebung P auf die Dichtelemente 2a, 2b, 2c wird durch die Ausgestaltung des zweiten Teils 52 des Gehäuses 5 effektiv reduziert, sodass insbesondere abrasive Medien einen nur reduzierten Einfluss auf die Dichtelemente ausüben können.

### Bezugszeichenliste

- 1: Drucksensor / Messzelle

- 3: Steg
- 4: Elektronikgehäuse
- 5: Gehäuse

- 7: Fügung / Schweißnaht
- 8: Behälteranschluss / Einschweißmuffe
- 9: Druckschraube

- 11: Dichtung
- 12: Gehäuseadapter
- 13: Außendichtung

- 15: Außensteg

- 17: Stützfläche

- 19: Zwischenraum
- 20: Dichtung

- 31: erster Abschnitt
- 32: zweiter Abschnitt
- 33: dritter Abschnitt
- 34: vierter Abschnitt
- 35: fünfter Abschnitt
- 36: sechster Abschnitt

- 51: erster Teil
- 52: zweiter Teil

- 100: Messanordnung

- 2a: erstes Dichtelement
- 2b: zweites Dichtelement
- 2c: drittes Dichtelement

- A: Axialrichtung
- R: Radialrichtung
- P: Prozessumgebung

## Patentansprüche

1. Messanordnung (100) mit einer Messzelle (1) zur Erfassung einer Prozessgröße und einem im Wesentlichen hohlzylindrisch ausgestalteten Gehäuse (5), das die Messzelle (1) wenigstens radial umgibt, wobei die Messzelle (1) in Axialrichtung (A) vorderseitig in dem Gehäuse (5) angeordnet ist und ein Zwischenraum (19) zwischen der Messzelle (1) und dem Gehäuse (5) gegen ein Eindringen von Prozessmedium mit einer Dichtung (20) abgedichtet ist, **dadurch gekennzeichnet, dass** die Dichtung (20) wenigstens ein die Messzelle (1) radial umgebendes erstes Dichtelement (2a) und ein die Messzelle (1) radial umgebendes zweites Dichtelement (2b) aufweist, das zweite Dichtelement (2b) in Axialrichtung (A) zu dem ersten Dichtelement (2a) beabstandet und vor diesem angeordnet ist und das Gehäuse (5) wenigstens einen sich in Axialrichtung (A) erstreckenden ersten Abschnitt (31) und wenigstens einen daran angeordneten sich in Radialrichtung (R) zwischen den Dichtelementen (2a, 2b, 2c) erstreckenden zweiten Abschnitt (32) aufweist.

2. Messanordnung (100) gemäß Anspruch 1,
**dadurch gekennzeichnet, dass**
das Gehäuse (5) einen sich in Axialrichtung (A) erstreckenden dritten Abschnitt (33) aufweist, der das zweite Dichtelement (2b) in Axialrichtung (A) überragt und an dem ein sich in Radialrichtung (R) erstreckender vierter Abschnitt (34) angeordnet ist, der in Axialrichtung (A) vor dem zweiten Dichtelement (2b) sitzt.

3. Messanordnung (100) gemäß einem der vorhergehenden Ansprüche,
**dadurch gekennzeichnet, dass**
das Gehäuse (5) einen sich in Axialrichtung (A) erstreckenden fünften Abschnitt (35) aufweist, der die Messzelle (1) in Axialrichtung (A) überragt, an dem ein sich in Radialrichtung (R) erstreckender sechster Abschnitt (36) angeordnet ist, und wobei zwischen dem sechsten Abschnitt und der Messzelle (1) ein drittes Dichtelement (2c) angeordnet ist.

4. Messanordnung (100) gemäß einem der vorhergehenden Ansprüche,
**dadurch gekennzeichnet, dass**
das Gehäuse (5) wenigstens zweiteilig ausgebildet ist, wobei ein erster Teil (51) Halterungsorgane zur mittelbaren oder unmittelbaren Befestigung der Messanordnung (1) an einem Behälter sowie wenigstens den ersten Abschnitt (31) und den zweiten Abschnitt (32) aufweist und der zweite Teil (52) wenigstens den dritten Abschnitt (33) und den vierten Abschnitt (35) und vorzugsweise den fünften Abschnitt und den sechsten Abschnitt (36) aufweist.

5. Messanordnung (100) gemäß Anspruch 4,
**dadurch gekennzeichnet, dass**
der erste Teil (51) und der zweite Teil (52) verschweißt sind.

6. Messanordnung (100) gemäß einem der vorhergehenden Ansprüche,
**dadurch gekennzeichnet, dass**
der zweite Teil (52) ferner eine Außendichtung (13) aufweist.

7. Messanordnung (100) gemäß einem der vorhergehenden Ansprüche,
**dadurch gekennzeichnet, dass**
die Dichtelemente (2a, 2b, 2c) als O-Ringe ausgebildet sind.

8. Messanordnung (100) gemäß einem der vorhergehenden Ansprüche,
**dadurch gekennzeichnet, dass**
die Halterungsorgane als umlaufender Außensteg (15) sowie als auf den Außensteg (15) wirkende Druckschraube (9) ausgebildet sind

## Claims

1. Measuring arrangement (100) having a measuring cell (1) for detecting a process parameter and a substantially hollow cylindrically formed housing (5) that at least radially surrounds the measuring cell (1), wherein the measuring cell (1) is arranged in the axial direction (A) on the front side in the housing (5) and a space (19) between the measuring cell (1) and the housing (5) is sealed with a seal (20) against penetration by a process medium,
**characterised in that**
the seal (20) has at least one first sealing element (2a) that radially surrounds the measuring cell (1) and a second sealing element (2b) that radially surrounds the measuring cell (1), the second sealing element (2b) is arranged at a distance from the first sealing element (2a) in the axial direction (A) and in front of it and the housing (5) has at least one first section (31) extending in the axial direction (A) and at least one second section (32) arranged thereon and extending in the radial direction (R) between the sealing elements (2a, 2b, 2c).

2. Measuring arrangement (100) according to claim 1,
**characterised in that**
the housing (5) has a third section (33) extending in the axial direction (A) that protrudes beyond the second sealing element (2b) in the axial direction (A) and is arranged on the one fourth section (34) extending in the radial direction (R) that is in front of the second sealing element (2b) in the axial direction (A).

3. Measuring arrangement (100) according to one of the preceding claims,
**characterised in that**
the housing (5) has a fifth section (35) extending in the axial direction (A) that protrudes beyond the measuring cell (1) in the axial direction (A), on which fifth section (35) a sixth section (36) extending in the radial direction (R) is arranged, and wherein a third sealing element (2c) is arranged between the sixth section and the measuring cell (1).

4. Measuring arrangement (100) according to one of the preceding claims,
**characterised in that**
the housing (5) is formed to be in at least two parts, wherein a first part (51) has fastening organs for indirectly or directly fixing the measuring arrangement (1) on a container and at least the first section (31) and the second section (32), and the second part (52) has at least the third section (33) and the fourth section (35) and preferably the fifth section and the sixth section (36).

5. Measuring arrangement (100) according to claim 4,
**characterised in that**
the first part (51) and the second part (52) are welded.

6. Measuring arrangement (100) according to one of the preceding claims,
**characterised in that**
the second part (52) further has an external seal (13).

7. Measuring arrangement (100) according to one of the preceding claims,
**characterised in that**
the sealing elements (2a, 2b, 2c) are formed as O-rings.

8. Measuring arrangement (100) according to one of the preceding claims,
**characterised in that**
the fastening organs are formed as a peripheral outer web (15) and as a setscrew (9) acting on the outer web (15).

## Revendications

1. Dispositif de mesure (100) comprenant une cellule de mesure (1) permettant de détecter une grandeur de procédé et un boîtier (5) essentiellement en forme de cylindre creux qui entoure au moins radialement la cellule de mesure (1), la cellule de mesure (1) étant montée côté avant dans le boîtier (5) dans la direction axiale (A), et un espace intermédiaire (19) compris entre la cellule de mesure (1) et le boîtier (5) étant rendu étanche par des moyens d'étanchéité (20) pour empêcher la pénétration de fluide de procédé,
**caractérisé en ce que**
les moyens d'étanchéité (20) comprennent au moins un premier élément d'étanchéité (2a) entourant radialement la cellule de mesure (1) et un second élément d'étanchéité (2b) entourant radialement la cellule de mesure (1), le second élément d'étanchéité (2b) étant situé à distance du premier élément d'étanchéité (2a) dans la direction axiale (A) et monté à l'avant de celui-ci, et le boîtier (5) comprend au moins un premier segment (31) s'étendant en direction axiale (A) et au moins un second segment (32) monté sur celui-ci et s'étendant en direction axiale (R) entre les éléments d'étanchéité (2a, 2b, 2c).

2. Dispositif de mesure (100) conforme à la revendication 1,
**caractérisé en ce que**
le boîtier (5) comprend un troisième segment (33) s'étendant dans la direction axiale (A) qui dépasse du second élément d'étanchéité (2b) dans la direction axiale (A) et sur lequel est monté un quatrième segment (34) s'étendant dans la direction radiale (R) qui est situé dans la direction axiale (A) à l'avant du second élément d'étanchéité (2b).

3. Dispositif de mesure (100) conforme à l'une des revendications précédentes,
**caractérisé en ce que**
le boîtier (5) comprend un cinquième segment (5) s'étendant dans la direction axiale (A) qui dépasse de la cellule de mesure (1) en direction axiale (A) sur lequel est monté un sixième segment (36) s'étendant dans la direction radiale (R), et, un troisième élément d'étanchéité (2c) est monté entre le sixième segment et la cellule de mesure (1).

4. Dispositif de mesure (100) conforme à l'une des revendications précédentes,
**caractérisé en ce que**
le boîtier (5) est réalisé en au moins deux parties, une première partie (51) comportant des organes de retenue pour permettre la fixation directe ou indirecte du dispositif de mesure (1) sur un réceptacle ainsi qu'au moins le premier segment (31) et le second segment (32) tandis que la seconde partie (52) comprend au moins le troisième segment (33) et le quatrième segment (35) et de préférence le cinquième segment et le sixième segment (36).

5. Dispositif de mesure (100) conforme à la revendication 4,
**caractérisé en ce que**
la première partie (51) et la seconde partie (52) sont soudées.

6. Dispositif de mesure (100) conforme à l'une des revendications précédentes,
**caractérisé en ce que**
la seconde partie (52) comporte en outre un joint d'étanchéité externe (13).

7. Dispositif de mesure (100) conforme à l'une des revendications précédentes,
**caractérisé en ce que**
les éléments d'étanchéité (2a, 2b, 2c) sont réalisés sous la forme de joints toriques.

8. Dispositif de mesure (100) conforme à l'une des revendications précédentes,
**caractérisé en ce que**
l'organe de retenue est réalisé sous la forme d'une nervure périphérique externe (15) et d'une vis de serrage (9) agissant sur cette nervure externe (15).
